# EUROPÄISCHE PATENTSCHRIFT

(11) **EP 1 062 276 B1**
(45) Veröffentlichungstag und Bekanntmachung des Hinweises auf die Patenterteilung: **29.09.2004**
(21) Anmeldenummer: 99911722.9
(22) Anmeldetag: 27.02.1999
(51) Int. Cl.: C08L 59/02, C08K 3/34

(54) **NUKLEIERTE POLYOXYMETHYLENFORMMASSEN**
NUCLEATED POLYOXYMETHYLENE MOLDING MATERIALS
MATIERES MOULABLES EN POLYOXYMETHYLENE AYANT SUBI UNE NUCLEATION

(30) Priorität: 12.03.1998 DE 19810659
(43) Veröffentlichungstag der Anmeldung: 27.12.2000
(73) Patentinhaber: BASF AKTIENGESELLSCHAFT, 67056 Ludwigshafen (DE)
(72) Erfinder: EBERLE, Wolfgang, D-67071 Ludwigshafen (DE); RIEGER, Peter, D-68259 Mannheim (DE); PLACHETTA, Christoph, D-67117 Limburgerhof (DE)
(86) Internationale Anmeldenummer: PCT/EP1999/001291
(87) Internationale Veröffentlichungsnummer: WO 1999/046331

(56) Entgegenhaltungen:
- DE-A- 2 037 823
- DE-A- 2 348 808
- DE-B- 2 540 207

## Beschreibung

Die Erfindung betrifft thermoplastische Formmassen, enthaltend
A) 20 bis 99,9 Gew.-% eines Polyoxymethylenhomo- oder Copolymerisats,
B) 0,0001 bis 1,0 Gew.-% eines Nukleierungsmittels, welches verschieden von C) ist,
C) 0,001 bis 5 Gew.-% eines Melamin-Formaldehyd-Kondensates,
D) 0 bis 70 Gew.-% weiterer Zusatzstoffe,
wobei die Summe der Gewichtsprozente der Komponenten A) bis D) jeweils 100 % ergeben.

Weiterhin betrifft die Erfindung die Verwendung der erfindungsgemäßen Formmassen zur Herstellung von Formkörpern und den hierbei erhältlichen Formkörpern.

Aus der DE-A 25 40 207 ist es bekannt, Melamin-Formaldehyd-Kondensate in Kombination mit Antioxidantien zur Verbesserung der thermischen Stabilität und Nukleierung von POM-Formmassen einzusetzen.

Weiterhin ist aus den DE-A 12 47 645 und DE-A 19 40 132 bekannt, Talkum als Nukleierungsmittel in POM einzuarbeiten, um die Größe der POM-Sphärolithe zu steuern, wobei eine Verbesserung und Vereinheitlichung der Kristallstruktur der Formteile erreicht wird.

Die bekannten Formmassen weisen Nachteile hinsichtlich der Verarbeitungsgeschwindigkeit z.B. beim Spritzguß auf (geringe Kristallisationsneigung des Polyoxymethylens).

Aufgabe der vorliegenden Erfindung war es daher, die Kristallisationsgeschwindigkeit von POM-Formmassen zu erhöhen, so daß diese sich besser und schneller bei den unterschiedlichen Verarbeitungsmethoden (z.B. im Spritzguß) verarbeiten lassen.

Diese Aufgabe wird durch die eingangs definierten Formmassen gelöst. Bevorzugte Ausführungsformen sind den Unteransprüchen zu entnehmen.

Als Komponente A) enthalten die erfindungsgemäßen Formmassen 20 bis 99,9, vorzugsweise 30 bis 98 Gew.-% und insbesondere 50 bis 98 Gew.-% eines Polyoxymethylenhomo- oder -copolymerisats.

Derartige Polymerisate sind dem Fachmann an sich bekannt und in der Literatur beschrieben.

Ganz allgemein weisen diese Polymere mindestens 50 mol-% an wiederkehrenden Einheiten -CH₂O- in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere als Komponente A bevorzugt, insbesondere solche, die neben den wiederkehrenden Einheiten -CH₂O- noch bis zu 50, vorzugsweise 0,1 bis 20, insbesondere 0,3 bis 10 mol-% und ganz besonders bevorzugt 2 bis 6 mol-% an wiederkehrenden Einheiten 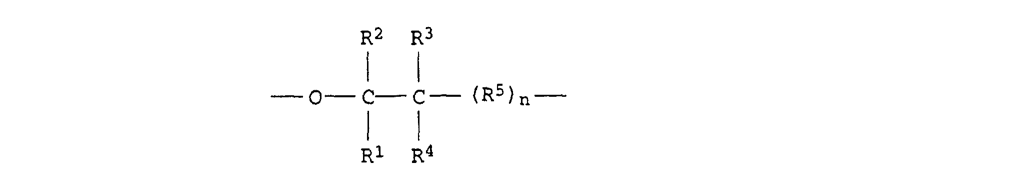 wobei R¹ bis R⁴ unabhängig voneinander ein Wasserstoffatom, eine C₁-bis C₄-Alkylgruppe oder eine halogensubstituierte Alkylgruppe mit 1 bis 4 C-Atomen und R⁵ eine -CH₂-, -CH₂O-, eine C₁-bis C₄-Alkyl- oder C₁-bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 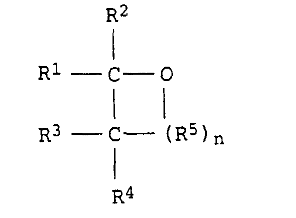 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo- oder Polyformale wie Polydioxolan oder Polydioxepan als Comonomere genannt.

Als Komponente A) ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise bifunktionellen Verbindungen der Formel 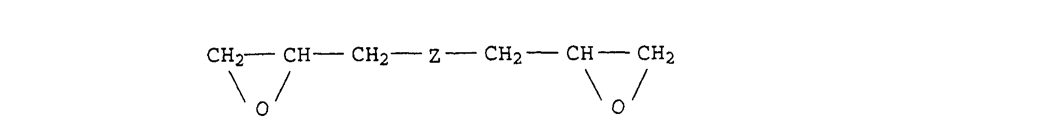 und/oder 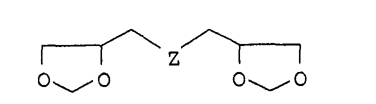 wobei Z eine chemische Bindung, -O-, -ORO- (R= C₁-bis C₈-Alkylen oder C₂-bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylencopolymere haben Schmelzpunkte von mindestens 150°C und Molekulargewichte (Gewichtsmittelwert) M_{w} im Bereich von 5000 bis 200000, vorzugsweise von 7000 bis 150000.

Endgruppenstabilisierte Polyoxymethylenpolymerisate, die an den Kettenenden C-C-Bindungen aufweisen, werden besonders bevorzugt.

Als Komponente B) enthalten die erfindungsgemäßen Formmassen 0,0001 bis 1 Gew.-%, vorzugsweise 0,001 bis 0,8 Gew.-% und insbesondere 0,01 bis 0,3 Gew.-% eines Nukleierungsmittels, welches verschieden von C) ist.

Als Nukleierungsmittel kommen alle bekannten Verbindungen in Frage, beispielsweise Melamincyanurat, Borverbindungen wie Bornitrid, Kieselsäure, Pigmente wie z.B. Heliogenblau ® (Kupferphthalocyaninpigment; eingetragenes Warenzeichen der BASF Aktiengesellschaft) oder verzweigte Polyoxymethylene, welche in diesen geringen Mengen eine nukleierende Wirkung zeigen.

Insbesondere wird als Nukleierungsmittel Talkum verwendet, welches ein hydratisiertes Magnesiumsilikat der Zusammensetzung Mg₃ [(OH)₂/Si₄O₁₀] oder 3 MgO · 4 SiO₂ · H₂O ist. Diese sogenannten Drei-Schicht-Phyllosilikate weisen einen triklinen, monoklinen oder rhombischen Kristallaufbau auf mit blättchenförmigem Erscheinungsbild. An weiteren Spurenelementen können Mn, Ti, Cr, Ni, Na und K anwesend sein, wobei die OH-Gruppe teilweise durch Fluorid ersetzt sein kann.

Besonders bevorzugt wird Talkum eingesetzt, dessen Teilchengrößen zu 100 % < 20 µm beträgt. Die Teilchengrößenverteilung wird üblicherweise durch Sedimentationsanalyse bestimmt und beträgt vorzugsweise:
< 20 µm 100 Gew.-%
< 10 µm 99 Gew.-%
< 5 µm 85 Gew.-%
< 3 µm 60 Gew.-%
< 2 µm 43 Gew.-%

Derartige Produkte sind im Handel als Micro-Talc I.T. extra (Fa. Norwegian Talc Minerals) erhältlich.

Als Komponente C) enthalten die erfindungsgemäßen Formmassen 0,001 bis 5 Gew.-%, vorzugsweise 0,01 bis 3 Gew.-% und insbesondere 0,05 bis 1 Gew.-% eines Melamin-Formaldehyd-Kondensates. Vorzugsweise ist dieses ein Fällungskondensat in feinteiliger Form, welches vernetzt und wasserunlöslich ist. Das Molverhältnis Formaldehyd zu Melamin beträgt vorzugsweise 1,2:1 bis 10:1, insbesondere 1,2:1 bis 2:1. Aufbau und Verfahren zur Herstellung derartiger Kondensate sind der DE-A 25 40 207 zu entnehmen.

Als Komponente D) können die erfindungsgemäßen Formmassen 0 bis 70 Gew.-%, vorzugsweise 0 bis 50 Gew.-% und insbesondere 0 bis 40 Gew.-% weitere Zusatzstoffe enthalten.

Als sterisch gehinderte Phenole D1) eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel 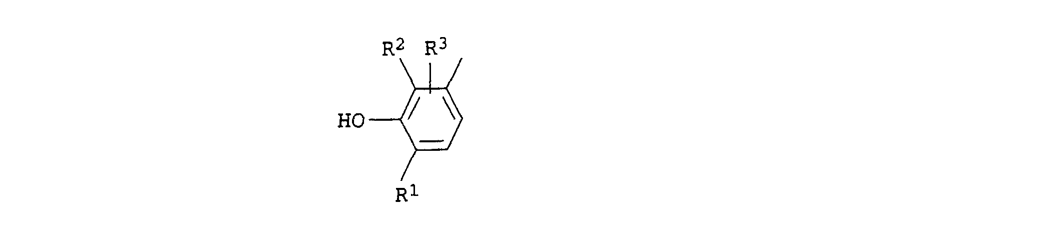 in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und R³ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US-A 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 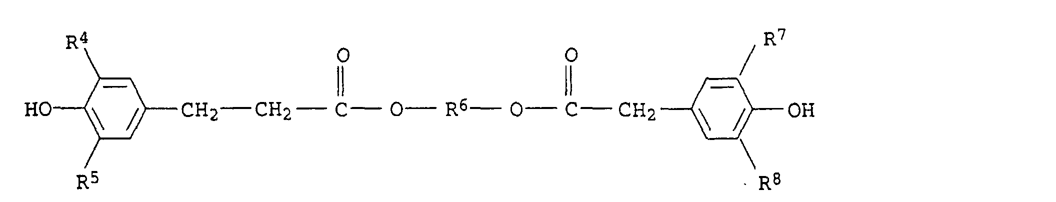 wobei R⁴, R⁵, R⁷ und R⁸ unabhängig voneinander C₁-C₈-Alkylgruppen, die ihrerseits substituiert sein können (mindestens eine davon ist eine sterisch anspruchsvolle Gruppe) und R⁶ einen zweiwertigen aliphatischen Rest mit 1 bis 10 C-Atomen, der in der Hauptkette auch C-O-Bindungen aufweisen kann.

Bevorzugte Verbindungen, die dieser Formen entsprechen, sind 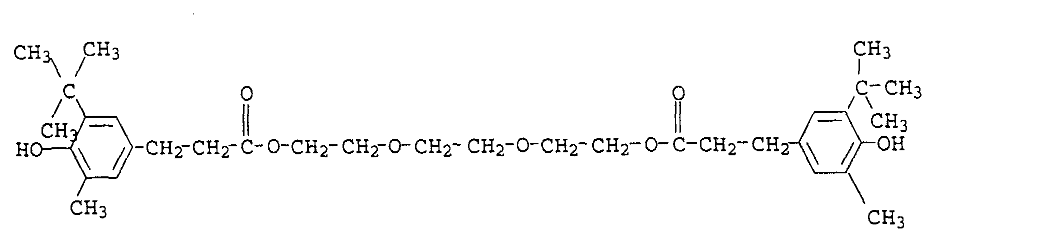 (Irganox® 245 der Firma CibA-Geigy) 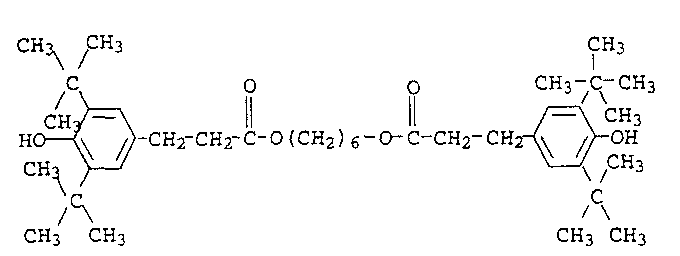 (Irganox® 259 der Firma Ciba-Geigy)

Beispielhaft genannt seien insgesamt als sterisch gehinderte Phenole:
2,2'-Methylen-bis-(4-methyl-6-tert.-butylphenol), 1,6-Hexandiolbis[3-(3,5-di-tert.-butyl-4-hydroxyphenyl)-propionat], Pentaerythril-tetrakis-[3-(3,5-di-tert.-butyl-4-hydroxyphenyl)-propionat], Distraryl-3,5-di-tert.-butyl-4-hydroxybenzylphosphonat, 2,6,7-Trioxa-1-phosphabicyclo-[2.2.2]oct-4-yl-methyl-3,5-ditert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-ditert.-butyl-4-hydroxybenzyl)-benzol, 4,4'-Methylen-bis-(2,6-ditert.-butylphenol), 3,5-Di-tert.-butyl-4-hydroxybenzyl-dimethylamin und N,N'-Hexamethylen-bis-3,5-di-tert.-butyl-4-hydroxyhydrocinnamid.

Als besonders wirksam erwiesen haben sich und daher vorzugsweise verwendet werden 2,2'-Methylen-bis-(4-methyl-6-tert.-butylphenyl), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] und das vorstehend beschriebene Irganox® 245 der Firma Ciba Geigy, das besonders gut geeignet ist.

Die Antioxidantien (D1), die einzeln oder als Gemische eingesetzt werden können, können in einer Menge bis zu 2 Gew.-%, vorzugsweise von 0,1 bis 1,0 Gew.-% bevorzugt 0,005 - 2 gew.-%, bezogen auf das Gesamtgewicht der Formmassen A) bis D) eingesetzt werden.

In machen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Die als Komponenten D2) verwendbaren Polyamide sind an sich bekannt. Halbkristalline oder amorphe Harze, wie sie z.B. in der Encyclopedia of Polymer Science and Engineering, Vol. 11, S. 315 bis 489, John Wiley & Sons, Inc., 1988, beschreiben werden, können eingesetzt werden, wobei der Schmelzpunkt des Polyamids vorzugsweise unter 225°C, vorzugsweise unter 215°C liegt.

Beispiele hierfür sind Polyhexamethylenazelainsäureamid, Polyhexamethylensebacinsäureamid, Polyhexamethylendodekandisäureamid, Poly-11-aminoundekansäureamid und Bis-(p-aminocyclohexyl)-methandodekansäurediamid oder die durch Ringöffnung von Lactamen, z.B. oder Polylaurinlactam erhaltenen Produkte. Auch Polyamide auf der Basis von Terephthal- oder Isophthalsäure als Säurekomponente und/oder Trimethylhexamethylendiamin oder Bis-(p-aminocyclohexyl)-propan als Diaminkomponente sowie Polyamidgrundharze, die durch Copolymerisation zweier oder mehrerer der vorgenannten Polymeren oder deren Komponenten hergestellt worden sind, sind geeignet.

Als besonders geeignete Polyamide seien Mischpolyamide auf der Grundlage von Caprolactam, Hexamethylendiamin, p,p'-Diaminodicyclohexylmethan und Adipinsäure genannt. Ein Beispiel hierfür ist das unter der Bezeichnung Ultramid® 1 C von der BASF Aktiengesellschaft vertriebene Produkt.

Weitere geeignete Polyamide werden von der Firma Du Pont unter der Bezeichnung Elvamide® vertrieben.

Die Herstellung dieser Polyamide wird ebenfalls in der vorgenannten Schrift beschrieben. Das Verhältnis von endständigen Aminogruppen zu endständigen Säuregruppen kann durch Variation des Molverhältnisses der Ausgangsverbindungen gesteuert werden.

Der Anteil des Polyamids in der erfindungsgemäßen Formmasse beträgt bis zu 2 Gew.-%, vorzugsweise 0,005 bis 1,99 Gew.-%, bevorzugt 0,1 bis 1,5 Gew.-%, und besonders bevorzugt 0,001-1 Gew.-%.

Durch die Mitverwendung eines Polykondensationsprodukts aus 2,2-Di-(4-hydroxyphenyl)propan (Bisphenol A) und Epichlorhydrin kann in manchen Fällen die Dispergierbarkeit der verwendeten Polyamide verbessert werden.

Derartige Kondensationsprodukte aus Epichlorhydrin und Bisphenol A sind kommerziell erhältlich. Verfahren zu deren Herstellung sind dem Fachmann ebenfalls bekannt. Handelsbezeichnungen der Polykondensate sind Phenoxy® (der Union Carbide Corporation) bzw. Epikote® (Firma Shell). Das Molekulargewicht der Polykondensate kann in weiten Grenzen variieren; prinzipiell sind die im Handel erhältlichen Typen sämtlich geeignet.

Als verstärkend wirkende Füllstoffe (welche verschieden von B) und C) sind) in Mengen bis zu 50 Gew.-%, vorzugsweise bis zu 40 Gew.-% seien beispielsweise Kaliumtitanat-Whisker, Kohlenstoff- und vorzugsweise Glasfasern genannt, wobei die Glasfasern z.B. in Form von Glasgeweben, -matten, -vliesen und/oder Glasseidenrovings oder geschnittener Glasseide aus alkaliarmem E-Glas mit einem Durchmesser von 5 bis 200 µm, vorzugsweise 8 bis 50 µm eingesetzt werden können, wobei die faserförmigen Füllstoffe nach ihrer Einarbeitung vorzugsweise eine mittlere Länge von 0,05 bis 1 µm, insbesondere 0,1 bis 0,5 µm aufweisen.

Andere geeignete Füllstoffe sind beispielsweise Calciumcarbonat oder Glaskugeln oder Mischungen dieser Füllstoffe.

Als weitere Zusatzstoffe seien, in Mengen bis zu 50, vorzugsweise 0 bis 40 Gew.-%, schlagzäh modifizierende Polymere (im folgenden auch als kautschukelastische Polymerisate oder Elastomere bezeichnet) genannt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/ 100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyltricyclo(5.2.1.0.2.6)-3,8-decadien oder deren Mischungen genannt. Bevorzugt werden Hexa-1,5-dien-5-Ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

Die EPDM-Kautschuke können auch mit weiteren Monomeren gepfropft sein, z.B. mit Glycidyl(meth)acrylaten, (Meth)acrylsäureestern und (Meth)acrylamiden.

Eine weitere Gruppe bevorzugter Kautschuke sind Copolymere des Ethylens mit Estern von (Meth)acrylsäure. Zusätzlich können die Kautschuke noch Epoxy-Gruppen enthaltende Monomere enthalten. Diese Epoxygruppen enthaltende Monomere werden vorzugsweise durch Zugabe Epoxygruppen enthaltenden Monomeren der allgemeinen Formeln I oder II zum Monomerengemisch in den Kautschuk eingebaut 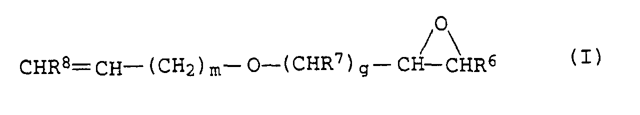 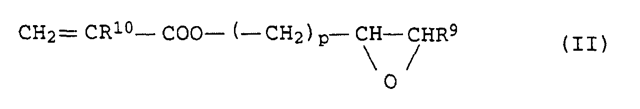 wobei R⁶ - R¹⁰ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R⁶ bis R⁸ Wasserstoff, wobei m für 0 oder 1 und g für 1 steht. Die entsprechenden Verbindungen sind Allylglycidylether und Vinylglycidylether.

Bevorzugte Verbindungen der Formel II sind Epoxygruppen-enthaltende Ester der Acrylsäure und/oder Methacrylsäure, wie Glycidylacrylat und Glycidylmethacrylat.

Vorteilhaft bestehen die Copolymeren aus 50 bis 98 Gew.-% Ethylen, 0 bis 20 Gew.-% Epoxygruppen enthaltenden Monomeren sowie der restlichen Menge an (Meth)acrylsäureestern.

Besonders bevorzugt sind Copolymerisate aus
- 50 bis 98,: insbesondere 55 bis 95 Gew.-% Ethylen, insbesondere 0,3 bis 20 Gew.-% Glycidylacrylat und/oder
- 0 bis 40,: insbesondere 0,1 bis 20 Gew.-% Glycidylmethacrylat, und
- 1 bis 50,: insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Aminooder Amidgruppen sowie funktionelle Gruppen, die durch Mitverwendung von Monomeren der allgemeinen Formel 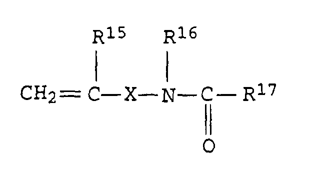 eingeführt werden können,
wobei die Substituenten folgende Bedeutung haben können:
- R¹⁵: Wasserstoff oder eine C₁- bis C₄-Alkylgruppe,
- R¹⁶: Wasserstoff, eine C₁- bis C₈-Alkylgruppe oder eine Arylgruppe, insbesondere Phenyl,
- R¹⁷: Wasserstoff, eine C₁- bis C₁₀-Alkyl-, eine C₆- bis C₁₂-Arylgruppe oder -OR₁₈
- R¹⁸: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder

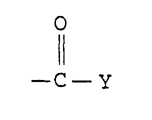

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvernetzende Monomere (graftlinking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente D) bis zu 5 Gew.-%, vorzugsweise nicht mehr als 3 Gew.-%, bezogen auf D).

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Monomere für den Kern | Monomere für die Hülle |
|---|---|
| Buta-1,3-dien, Isopren, n-Butylacrylat, Ethylhexylacrylat oder deren Mischungen, ggf. zusammen mit vernetzenden Monomeren | Styrol, Acrylnitril, (Meth)acrylate, gegebenenfalls mit reaktiven Gruppen wie hierin beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Die beschriebenen Elastomere D) können auch nach anderen üblichen Verfahren, z.B. durch Suspensionspolymerisation, hergestellt werden.

Als weitere geeignete Elastomere seien thermoplastische Polyurethane genannt, wie sie beispielsweise in der EP-A 115 846 beschrieben sind.

Selbstverständlich können auch Mischungen der vorstehend aufgeführten Kautschuktypen eingesetzt werden.

Die erfindungsgemäßen Formmassen können noch weitere übliche Zusatzstoffe und Verarbeitungshilfsmittel enthalten. Nur beispielhaft seien hier Zusätze zum Abfangen von Formaldehyd (Formaldehyd-Scavenger), Weichmacher, Haftvermittler und Pigmente genannt. Der Anteil solcher Zusätze liegt im allgemeinen im Bereich von 0,001 bis 5 Gew.-%.

Die Herstellung der erfindungsgemäßen thermoplastischen Formmassen erfolgt durch Mischen der Komponenten in an sich bekannter Weise, weshalb sich hier detaillierte Angaben erübrigen. Vorteilhaft erfolgt die Mischung der Komponenten auf einem Extruder.

Die erfindungsgemäßen thermoplastischen Formmassen zeichnen sich durch ein ausgewogenes Eigenschaftsspektrum aus und zeigen eine gute Kristallisationsgeschwindigkeit, so daß diese schneller zu Formkörpern z.B. im Spritzguß verarbeitet werden können. Daher eignen sich derartige Formteile insbesondere zur Anwendung als Formkörper wie Kettenglieder, Gleitrollen, Gleitschienen oder Zahnräder.

### Beispiele

Es wurden folgende Komponenten eingesetzt:

### Komponente A:

Polyoxymethylencopolymerisat aus 97,3 Gew.-% Trioxan und 2,7 Gew.-% Butandiolformal. Das Produkt enthielt noch ungefähr 3 Gew.-% nicht umgesetztes Trioxan und 5 Gew.-% thermisch instabile Anteile. Nach Abbau der thermisch instabilen Anteile hatte das Copolymer einen MVR von 7,5 ml/10 min (190°C, 2,16 kg, nach ISO 1133/B)

### Komponente B)

Talkum (Mikro-Talc I.T. Extra)

| Teilchengröße | % |
|---|---|
| < 20 µm | 100 |
| < 10 µm | 99 |
| < 5 µm | 85 |
| < 3 µm | 60 |
| < 2 µm | 43 |

bestimmt mittels Sedimentationsanalyse.

### Komponente C)

Melamin-Formaldehyd-Kondensat (MFK) gemäß Beispiel 1 der DE-A 25 40 207.

### Komponente D1)

Irganox® 245 der Firma Ciba Geigy:

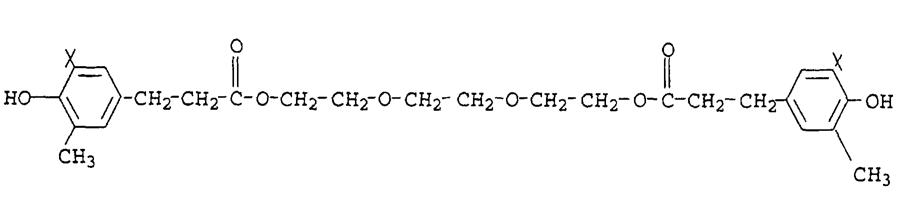

### Komponente D2)

Polyamid-Oligomeres mit einem Molekulargewicht von etwa 3000, hergestellt aus Caprolactam, Hexamethylendiamin, Adipinsäure und Propionsäure (als Molekulargewichtsregler) in Anlehnung an die Beispiele 5-4 der US-A 3 960 984 ("PA-dicapped").

Zur Herstellung der Formmassen wurde die Komponente A) mit den in der Tabelle angegebenen Mengen der Komponenten B) bis D) einem Trockenmischer bei einer Temperatur von 23°C gemischt. Die so erhaltene Mischung wurde in einem Doppelschneckenextruder mit Entgasungsvorrichtung (ZSK 28 der Firma Werner & Pfleiderer) eingebracht, bei 190 bis 230°C homogenisiert, entgast und das homogenisierte Gemisch durch eine Düse als Strang ausgepreßt und granuliert.

### Messung der isothermen Kristallisationszeit:

Das Kristallisationsverhalten der Materialien wurde mittels DSC (Differential Scanning Calorimetry) bestimmt. Dabei wurden ca. 5 mg des Granulates mit 20 K/min auf 180°C aufgeheizt, wobei die Probe schmolz. Danach wurde auf 148°C abgekühlt und die Zeit bis zum Kristallisationsmaximum bei dieser Temperatur gemessen.

Die Ergebnisse der Messungen und die Zusammensetzung der Formmassen sind der Tabelle zu entnehmen.

**Tabelle**

| Zusammensetzung [Gew.-%] | | | | | Isotherme Kristallisationszeit [min] |
|---|---|---|---|---|---|
| 1* 99,41 A | 0,2 B | - | 0,35 D1 | 0,04 D2 | 0,42 |
| 2* 99,41 A | - | 0,2 C | 0,35 D1 | 0,04 D2 | 0,8 |
| 3 99,21 A | 0,2 B | 0,2 C | 0,35 D1 | 0,04 D2 | 0,25 |

| | | | | | |
|---|---|---|---|---|---|
| * zum Vergleich | | | | | |

## Patentansprüche

1. Thermoplastische Formmassen, enthaltend
A) 20 bis 99,9 Gew.-% eines Polyoxymethylenhomo- oder Copolymerisats,
B) 0,0001 bis 1,0 Gew.-% eines Nukleierungsmittels, welches verschieden von C) ist,
C) 0,001 bis 5 Gew.-% eines Melamin-Formaldehyd-Kondensates,
D) 0 bis 70 Gew.-% weiterer Zusatzstoffe,
wobei die Summe der Gewichtsprozente der Komponenten A) bis D) jeweils 100 % ergeben.

2. Thermoplastische Formmassen nach Anspruch 1, in denen die Komponente B) Talkum ist.

3. Thermoplastische Formmassen nach den Ansprüchen 1 oder 2, in denen die Komponente B) eine Teilchengröße zu 100 % von < 20 µm aufweist.

4. Thermoplastische Formmassen nach den Ansprüchen 1 bis 3, in denen die Komponente C) aus einem feinteiligen, vernetzten, wasserunlöslichen Fällungspolykondensat aus Formaldehyd und Melamin im Molverhältnis 1,2 : 1 bis 10:1 aufgebaut ist.

5. Thermoplastische Formmassen nach den Ansprüchen 1 bis 4, enthaltend als Zusatzstoff D) 0,005 bis 2 Gew.-% eines sterisch gehinderten Phenols oder 0,001 bis 1 Gew.-% eines Polyamids oder deren Mischungen.

6. Thermoplastischen Formmassen nach den Ansprüchen 1 bis 5, in denen als Komponente D) ein sterisch gehindertes Phenol mit nicht mehr als einer sterisch gehinderten Gruppe in ortho-Stellung zur phenolischen Hydroxygruppe eingesetzt wird.

7. Verwendung der thermoplastischen Formmassen gemäß den Ansprüchen 1 bis 6 zur Herstellung von Fasern, Folien und Formkörpern.

8. Formkörper erhältlich aus den thermoplastischen Formmassen gemäß den Ansprüchen 1 bis 6.

## Claims

1. A thermoplastic molding composition comprising
A) from 20 to 99.9% by weight of a polyoxymethylene homo- or copolymer,
B) from 0.0001 to 1.0% by weight of a nucleating agent which differs from C),
C) from 0.001 to 5% by weight of a melamine-formaldehyde condensate, and
D) from 0 to 70% by weight of other additives,
where the sum of the percentages by weight of components A) to D) is always 100%.

2. A thermoplastic molding composition as claimed in claim 1, in which component B) is talc.

3. A thermoplastic molding composition as claimed in claim 1 or 2, in which 100% of component B) has a particle size of < 20 µm .

4. A thermoplastic molding composition as claimed in any of claims 1 to 3, in which component C) is composed of a finely divided, crosslinked, water-insoluble precipitation polycondensate of formaldehyde and melamine in a molar ratio of from 1.2:1 to 10:1.

5. A thermoplastic molding composition as claimed in any of claims 1 to 4, comprising, as additive D), from 0.005 to 2% by weight of a sterically hindered phenol or from 0.001 to 1% by weight of a polyamide or mixtures of these.

6. A thermoplastic molding composition as claimed in any of claims 1 to 5, in which component D) is a sterically hindered phenol with not more than one sterically hindered group in ortho position to the phenolic hydroxyl group.

7. The use of the thermoplastic molding compositions as claimed in any of claims 1 to 6 for producing fibers, films or moldings.

8. A molding obtainable from the thermoplastic molding compositions as claimed in any of claims 1 to 6.

## Revendications

1. Matières moulables thermoplastiques, comprenant :
A) de 20 à 99,9 % en poids d'un homopolymère ou d'un copolymère de polyoxyméthylène,
B) de 0,0001 à 1,0 % en poids d'un moyen de nucléation, qui est différent de C),
C) de 0,001 à 5 % en poids d'un condensat de mélamine-formaldéhyde,
D) de 0 à 70 % en poids d'autres adjuvants,
sachant que les sommes des pourcentages en poids des composants A) à D) se montent à chaque fois à 100 %.

2. Matières moulables thermoplastiques selon la revendication 1, dans lesquelles le composant B) est de la poudre de talc.

3. Matières moulables thermoplastiques selon les revendications 1 ou 2, dans lesquelles le composant B) présente une taille de particule élémentaire à 100 % < 20 µm.

4. Matières moulables thermoplastiques selon les revendications 1 à 3, dans lesquelles le composant C) est constitué d'un polycondensat précipité finement moulu, réticulé et insoluble dans l'eau, constitué de formaldéhyde et de mélamine dans un rapport molaire allant de 1,2 : 1 à 10 : 1.

5. Matières moulables thermoplastiques selon les revendications 1 à 4, comprenant comme adjuvant D) de 0,005 à 2 % en poids d'un phénol stériquement encombré, ou de 0,001 à 1 % en poids d'un polyamide ou de leurs mélanges.

6. Matières moulables thermoplastiques selon les revendications 1 à 5, dans lesquelles un phénol stériquement encombré avec pas plus d'un groupe stériquement encombré dans la position ortho par rapport au groupe hydroxy phénolique, est utilisé comme composant D).

7. Utilisation des matières moulables thermoplastiques selon les revendications 1 à 6 pour la préparation de fibres, de feuilles et de corps moulés.

8. Corps moulés pouvant être obtenus à partir des matières moulables selon les revendications 1 à 6.
